Europäisches Patentamt

**European Patent Office**

**Office européen des brevets**

(11) Publication number: **0 411 681 A2**

# EUROPEAN PATENT APPLICATION

(21) Application number: 90201018.0

(51) Int. Cl.⁵: **A23D 9/00**

(22) Date of filing: **23.04.90**

(30) Priority: **03.08.89 US 389029**

(43) Date of publication of application:
**06.02.91 Bulletin 91/06**

(84) Designated Contracting States:
**AT BE CH DE DK ES FR GB GR IT LI LU NL SE**

(71) Applicant: **THE PROCTER & GAMBLE COMPANYANY**
**One Procter & Gamble Plazaaza**
**Cincinnati Ohio 45202(US)**

(72) Inventor: **Bono, James Lee**
**7302 Southpointe Drive**
**Cincinnati, OH 45233(US)**
Inventor: **Pentelnik, Steven Aaron**
**2783 Losantiridge Avenue**
**Cincinnati, OH 45213(US)**
Inventor: **Drzewiecki, Paul Joseph**
**3049 Socialville Foster Rd.**
**Maineville, OH 45039(US)**

(74) Representative: **Suslic, Lydia et al**
**Procter & Gamble European Technical**
**Center N.V. Temselaan 100100**
**B-1853 Strombeek-Bever(BE)**

(54) Cooking oils with reduced odor-producing tendencies in frying.

(57) Cooking oils which have a reduced tendency to produce odors when heated to frying temperatures, the said oils being refined, bleached and deodorized and being a mixture of (A) sunflower seed oil and (B) soybean oil or a blend of soybean oil and canola oil, the weight ratio of (A):(B) being from about 20:80 to about 70:30.

EP 0 411 681 A2

## COOKING OILS WITH REDUCED ODOR-PRODUCING TENDENCIES IN FRYING

### Technical Field

The present invention relates to cooking oils formulated to have a reduced tendency to produce objectionable odors when heated to frying temperatures.

### Background of the Invention

The present invention pertains to particular mixtures of vegetable oils having a reduced tendency to produce objectionable odors when heated to frying temperatures.

Generally, vegetable oils intended to be used for cooking or other food preparation purposes, are processed by subjecting them to the well known processes of alkali refining, earth bleaching and steam deodorization. Refining and bleaching are described in detail in Chapter 4 of Volume 2 of Baileys Industrial Oil and Fat Products, Wiley-Interscience Publishers (1982), incorporated by reference herein. Deodorization is described in detail in Chapter 3 of Volume 3 of Baileys Industrial Oil and Fat Products, Wiley-Interscience Publishers (1985), incorporated by reference herein. Subjection to these treatments produces an oil which has a relatively bland odor at room temperature and very light color.

Notwithstanding the aforedescribed treatments, however, when the oils (especially soybean oil and canola oil) are subjected to frying temperatures, they produce odors in the area surrounding the site of cooking. These odors are generally objectionable, and are variously described as "fishy", "acrid", etc.

A commonly used means of reducing the tendency of refined vegetable oils to produce objectionable odors when heated to frying temperatures is partial hydrogenation. However, the hydrogenation process must be carefully controlled to prevent the resulting oil from obtaining a lard-like consistency. Furthermore, hydrogenation increases the saturation of fatty acids in the oil, which many experts in the field believe causes a reduction in the nutritional value of the oil. Also, increased saturation is associated by many experts in the medical field with increased risk of heart disease. Hydrogenation also has an economic disadvantage because it produces stearin in the oil, which must be removed by winterization so that the oil will remain clear when shipped or stored in cool environments. Hydrogenation is also undesirable from a marketing standpoint since the hydrogenated oil cannot be promoted to consumers as "natural".

U.S. Pat. 3,758,532, Gibble, issued September 11, 1973 discloses a process for treating soybean oil to improve its odor during storage and frying. In that process the refined oil is degassed, then gassed with carbon dioxide and then heated in the presence of copper chromite under a carbon dioxide atmosphere. The use of carbon dioxide and copper chromite adds to the cost of processing the oil.

The blending of vegetable oils for economic reasons and/or to obtain specific averaged physical properties or fatty acid compositions is well known. U.S. Pat. 4,568,556, McCoy, issued February 4, 1986 discloses the use of individual oils and mixtures thereof as the "soft oil" in margarines. Preferred oils are safflower oil, sunflower oil, soybean oil and mixtures thereof. U.S. 3,186,854, Going, issued June 1, 1965 discloses the use of mixtures of various oils and crystal inhibitors to obtain salad oils which remain clear when stored at low temperatures.

U.S. Pat. 3,529,974, Melnick et al., issued September 22, 1970 discloses a blend of oils intended to achieve the fatty acid composition, nutritional value and physical properties of corn oil. The oil blend comprises 40-45% refined/bleached sunflower oil, 20-25% refined/bleached/hydrogenated/winterized soybean oil, 15-70% refined/bleached/winterized cottonseed oil and 3-8% refined/bleached peanut oil. The mixture of oils is deodorized after blending.

EPO Application 191,519, published August 20, 1986 and assigned to Unilever discloses the addition of very small amounts (0.5-50 mg/kg) of flavor oils (linolool and linalyl acetate) to cooking oils to improve the odor of oils during frying.

It is the object of the present invention to provide refined, bleached and deodorized cooking oils which have a reduced tendency to produce objectionable odors when heated to frying temperatures, without the necessity of subjecting the oils to additional processing, or adding ingredients to the oil.

### Summary of the invention

The invention provides cooking oils having a reduced tendency to produce objeotionable odors when heated to frying temperatures. The oils comprise a mixture of (A) sunflower seed oil with (B) soybean oil or a blend of soybean oil and canola oil in which canola oil comprises up to about 90% of the blend, wherein the ratio of (A):(B) is from about 20:80 to 70:30.

Detailed Description of the Invention

In accordance with the present invention, it has been surprisingly found that when sunflower oil is used in particular mixtures with soybean oil or blends of soybean/canola, the resulting oil composition has a substantially lower tendency to produce objectionable odors at frying temperatures than is the case when the individual oils are used.

Sunflower seed oil is a highly unsaturated oil which can be obtained from the seeds of the plant Helionthus annuus . The ratio of unsaturated to saturated fatty acids ranges from about 10.5:1 to about 6:1 and the iodine value ranges from about 125 to 136.

Soybean oil is a highly unsaturated oil which can be obtained from the seeds of the legume, Soja max . The ratio of unsaturated to saturated acids ranges from about 8:1 to about 4:1 and the iodine value of the oil is typically in the range of from about 120 to 141.

Canola oil (also called low erucic acid rapeseed oil) is a highly unsaturated oil which can be obtained from the seeds of the plants Brassica napus or Brassica campestris . Approximately 94% of the fatty acid content of canola oil is unsaturated fatty acids, and the iodine value is typically in the range of from about 111 to about 120.

The mixture of (A) sunflower seed oil and (B) soybean oil or soybean oil/canola oil comprises at least 90%, preferably at least 95%, more preferably preferably at least 99%, and most preferably 100%, of the cooking oil composition. All percentages and ratios herein are "by weight" unless specified otherwise.

Other materials which can be present in the oil composition include additional oils (such as safflower, cottonseed, and corn oils) and fatty acid monoglyceride emulsifiers at levels up to about 10%, other emulsifiers and/or anti spattering agents such as silicones or ethoxylated fatty acid esters of sorbitan at levels up to about 1%, and trace ingredients such as antioxidants and fat-soluble vitamins at levels up to about 0.5%.

The weight ratio of component (A) to component (B) in the cooking oils of the present invention should be in the range of (A):(B) of from about 20:80 to about 70:30. Preferably, the ratio should be from about 25:75 to 35:65, and most preferably about 30:70. When a soybean oil/canola oil blend is used as Component B, the canola oil comprises up to about 90%, preferably up to about 75% of the blend. Preferably these blends comprise from about 25% to 80% soybean oil and 20% to 75% canola oil.

The oils used in the compositions of the present invention should be refined, bleached and deodorized. Refining, bleaching and deodorizing treatments can be done before or after the oils are mixed. The oils should not be hydrogenated.

The present invention will be illustrated by the following example.

EXAMPLE

Cooking oil compositions were tested for the room odor produced by the oils when heated. The testing was done at the Northern Regional Research Center of the U.S. Department of Agriculture (USDA) at Peoria, Illinois, substantially according to a technique described in J.A.O.C.S., Vol. 56, 659-63 (July 1979), incorporated by reference herein.

Briefly, an open pan containing 300 ml of the test oil is located under a small hood which is connected by ducts to an odor evaluation room. The room is approximately 5 ft x 8 ft x 10 ft (1.53 m x 2.75 m x 3.05 m). The oil is heated to frying temperatures (375°F/190°C). The odor from the heated oil is drawn through the room by exhaust ducts along the floor of the room. Two such rooms are available for testing.

Expert judges enter an odor evaluation room through three buffer rooms which are at a positive pressure relative to the odor evaluation room to prevent premature exposure to the odors. Once inside, the judges evaluate the odor and enter their response into a computer terminal located in the room. Instead of using the grading system described in the above cited J.A.O.C.S. article, an alternate procedure is used in which each judge evaluates the odor for intensity on a scale of 1 (no odor) to 10 (extreme odor). Further, the judges evaluate the odors for their character such as "fried food", "doughy", "fishy", "rancid", etc. Each test uses 12-15 judges and each judge does two odor evaluations per day. Once the test is complete, average ratings are computed for odor intensity and character. The odor character grades are also given an intensity rating on a 1-10 scale, with a lower score indicating a lower intensity of the particular odor character. However, grades for a particular odor character are not reported if less than 25% of the panelists rate that character. Character grades of less than 0.5 are generally not considered important.

The following compositions were included in the test conducted at USDA. The oils selected were considered representative of each type of oil.

1. Crisco Oil®, Market Code 9094D, 100% refined, bleached and deodorized soybean oil, marketed by The Procter & Gamble Company.

2. Wesson Sunflowerseed Oil®, Market Code M83F1, 100% sunflower seed oil, marketed by Beatrice/Hunt-Wesson, Inc., believed to be refined, bleached and deodorized.

3. 30%/70% mixture of and Wesson Sunflowerseed Oil, Market Code M83F1, and Crisco Oil® Market Code 9094D.

4. Sterling Oil®, Market Code 9041D, 100% refined, bleached, partially hydrogenated and winterized and deodorized soybean oil (Iodine Value about 116), marketed by The Procter & Gamble Company.

The odor results obtained were as follows:

| | 1 | 2 | 3 | 4 |
|---|---|---|---|---|
| | Soy | Sun | 30/70 Sun/Soy | Hyd./Wint. Soy |
| OVERALL OIL ODOR INTENSITY | 6.5 | 5.3 | 3.6 | 4.5 |
| OIL ODOR CHARACTER | | | | |
| Fried Food | 4.6 | 3.7 | 2.3 | 3.0 |
| Acrid | 2.0 | 1.0 | 0.8 | 1.0 |
| Fishy | 3.1 | - | - | - |

Composition 3 (30/70 sunflower seed oil/soybean oil) was clearly superior to both soybean oil and sunflower seed oil and to hydrogenated, winterized soybean oil in having lower overall odor intensity and in having lower odor character identification. Likewise, when mixtures of sunflower seed oil/soybean oil/canola oil (for example, a ratio of 30/50/20) are used according to the present invention, the mixture is superior to the individual oils in having a reduced tendency to produce odors when heated.

**Claims**

1. A cooking oil composition having low odor producing tendencies upon being heated, the said oil comprising at least 90 percent of a mixture consisting of (A) refined, bleached and deodorized sunflower seed oil, and (B) an oil selected from the group consisting of refined, bleached and deodorized soybean oil, and a blend of refined, bleached and deodorized soybean oil and refined, bleached and deodorized canola oil, wherein canola oil comprises up to about 90% of the blend; wherein the weight ratio of (A):(B) is from about 20:80 to about 70:30.

2. The composition of Claim 1 wherein the mixture of (A) and (B) comprises at least 95% of said composition.

3. The composition of Claim 2 wherein the weight ratio of (A):(B) is from about 25:75 to about 35:65.

4. The composition of Claim 3 wherein the weight ratio of (A):(B) is about 30:70.

5. The composition of any one of Claims 1 through 4 wherein Component (B) is a blend of soybean oil and canola oil wherein canola oil comprises up to about 90% of the said blend.

6. The composition of any one of Claims 1 through 4 wherein Component 8 is soybean oil.

7. The composition of Claim 5 wherein the mixture of (A) and (B) comprises at least 99% of the said composition.

8. The composition of Claim 6 wherein the mixture of (A) and (B) comprises at least 99% of the said composition.

9. The composition of Claim 5 wherein canola oil comprises up to about 75% of the said blend.